**Europäisches Patentamt**

**European Patent Office**

**Office européen des brevets**

(19)

(11) Veröffentlichungsnummer: **0 194 437**
**B1**

# (12) EUROPÄISCHE PATENTSCHRIFT

(45) Veröffentlichungstag der Patentschrift:
**26.10.88**

(21) Anmeldenummer: **86101253.2**

(22) Anmeldetag: **31.01.86**

(51) Int. Cl.⁴: **G 01 D 7/04**

(54) **Anzeigevorrichtung.**

(30) Priorität: **20.02.85 DE 3505735**

(43) Veröffentlichungstag der Anmeldung:
**17.09.86 Patentblatt 86/38**

(45) Bekanntmachung des Hinweises auf die Patenterteilung:
**26.10.88 Patentblatt 88/43**

(84) Benannte Vertragsstaaten:
**DE FR GB IT SE**

(56) Entgegenhaltungen:
**DE - B - 2 059 474**

(73) Patentinhaber: **VDO Adolf Schindling AG,
Gräfstrasse 103, D-6000 Frankfurt/Main (DE)**

(72) Erfinder: **Mayer, Klaus, Beethovenstrasse 17,
D-6053 Obertshausen (DE)**

(74) Vertreter: **Klein, Thomas, Dipl.-Ing. (FH), Sodener
Strasse 9 Postfach 6140, D-6231 Schwalbach a. Ts. (DE)**

## Beschreibung

Die Erfindung betrifft eine Anzeigevorrichtung zur Anzeige von zwei Messwerten auf einer mit zwei konzentrisch zueinander angeordneten Skalen versehenen Skalenscheibe, mit zwei Zeigern, die um zueinander koaxiale Zeigerachsen drehbar und jeweils einer Skala zugeordnet sind, wobei jeder Zeiger von jeweils einem Messwerk drehbar antreibbar ist.

Bei derartigen Anzeigevorrichtungen ist es bekannt, die Messwerke auf der dem Beobachter abgewandten Seite der Skalenscheibe anzuordnen. Dies bedarf eines grossen Aufwands, um den Drehantrieb der Messwerke auf die koaxialen Zeiger zu übertragen.

Aufgabe der Erfindung ist es daher, eine Anzeigevorrichtung nach dem Oberbegriff zu schaffen, die mit nur geringem Platz- und Bauteilaufwand einen Drehantrieb der Zeiger ermöglicht.

Diese Aufgabe wird erfindungsgemäss dadurch gelöst, dass die Messwerke koaxial zueinander je auf einer Seite der Skalenscheibe angeordnet und die die Zeiger tragenden Enden der Zeigerachsen einander zugewandt sind.

Diese Ausbildung ermöglicht es, die Zeigerachsen koaxial zu den Abtriebswellen der Messwerke anzuordnen, so dass keine platz- und bauteilaufwendigen Übertragungsgetriebe von den Messwerken zu den Zeigern erforderlich sind.

Die Messwerke können dabei entweder in einem die Skalenscheibe in einem Bereich ausserhalb der Skalen u-förmig umgreifenden Gehäuse oder in einem die Skalenscheibe in einem Bereich ausserhalb der Skalen durchragenden Gehäuse angeordnet sein, das gleichzeitig mit einem Fussteil ausgebildet sein kann.

Insbesondere bei einer undurchsichtig ausgebildeten Skalenscheibe durchragt die Zeigerachse des einen Zeigers eine Ausnehmung der Skalenscheibe, und beide Zeiger sind auf einer Seite der Skalenscheibe angeordnet.

Zur Unterscheidung welcher Zeiger welcher der Skalen zugeordnet ist, kann der der Skalenscheibe nähere Zeiger eine geringere Längserstreckung besitzen als der der Skalenscheibe entferntere Zeiger.

Damit ist es auch möglich, dass die Zeiger mit ihren freien Enden zur Skalenscheibe geneigt sind, wodurch eine eindeutige Ablesung der angezeigten Werte aus unterschiedlichen Positionen des Beobachters gewährleistet wird.

Sind dabei die Skalen in radialem Abstand zueinander angeordnet, so ist jeweils eine Zeigerspitze eindeutig einer bestimmten Skala zugeordnet.

Zum Schutz gegen Beschädigung und Verschmutzung sind vorzugsweise die Zeiger in einer Kammer angeordnet, die aus der Skalenscheibe und einer beobachterseitig in einem Abstand dazu angeordneten, transparenten Abdeckscheibe gebildet ist.

Die koaxiale Hintereinanderanordnung der Messwerke und deren damit nur geringe radiale Erstreckung ist besonders von Vorteil, wenn die Skalenscheibe als transparente, von der dem Beobachter abgewandten Seite lichtdurchströmbare Platte ausgebildet ist, auf der die lichtundurchlässigen Skalen angeordnet sind, da so der grösste Teil der Skalenscheibe auch an seiner Rückseite frei und damit gut lichtdurchströmbar ist.

In einer Weiterbildung kann dabei die Skalenscheibe als beleuchtbare Lichtleitplatte ausgebildet sein, in der lichtumlenkende Partikel angeordnet sind, so dass auch bei Dunkelheit eine einwandfreie Ablesung der Messwerte möglich ist.

Vorzugsweise kann die Anzeigevorrichtung auf dem Armaturenbrett eines Kraftfahrzeugs angeordnet und von dem an der Windschutzscheibe eintretenden Licht durchströmbar sein.

Ein Ausführungsbeispiel der Erfindung ist in der Zeichnung dargestellt und wird im folgenden näher beschrieben. Es zeigen

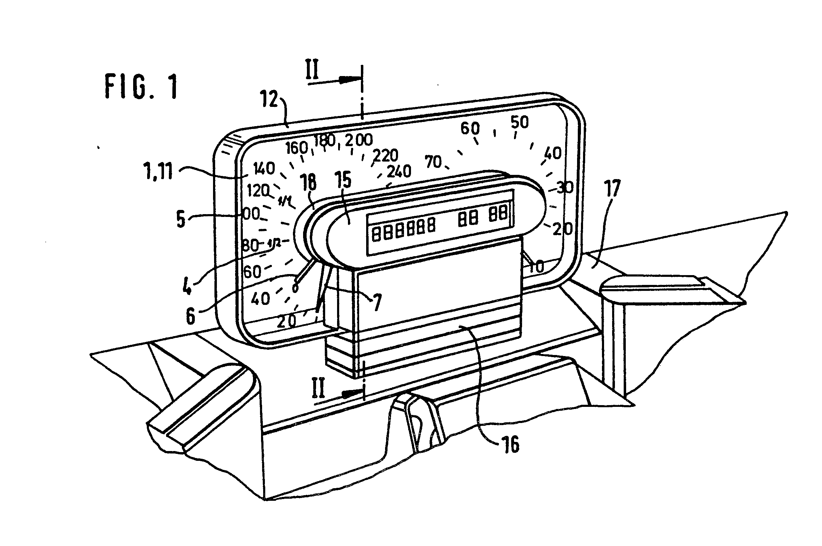

Figur 1 eine perspektivische Ansicht einer Anzeigevorrichtung

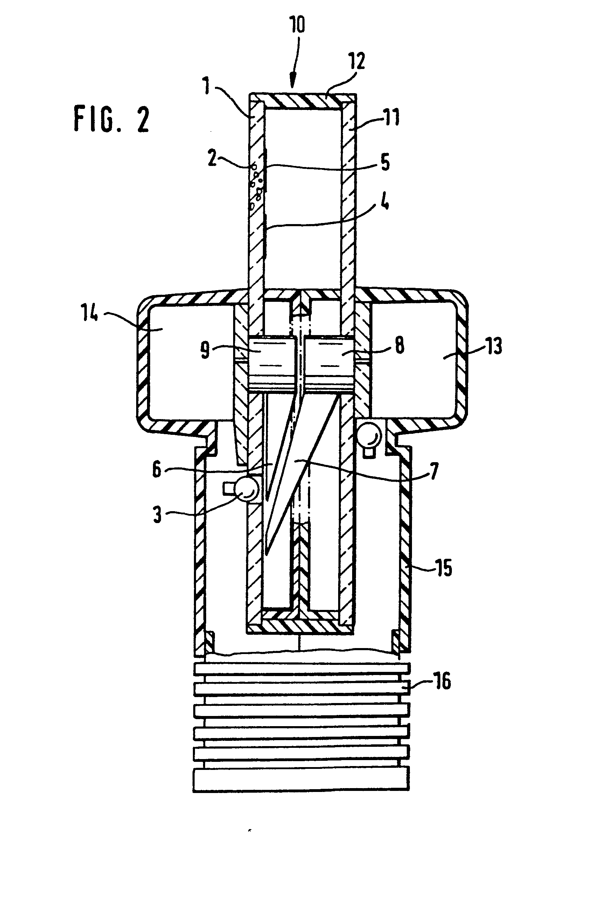

Figur 2 die Anzeigevorrichtung nach Figur 1 im Schnitt entlang der Linie II–II.

Die in der Zeichnung dargestellte Anzeigevorrichtung besitzt eine als transparente Lichtleitplatte ausgebildete Skalenscheibe 1, in der lichtumlenkende Partikel 2 angeordnet sind.

Von einer Lichtquelle 3 ist Licht in die Skalenscheibe 1 einleitbar, so dass diese einen diffus hellen Hintergrund für zwei konzentrisch zueinander auf der Oberfläche der Skalenscheibe 1 angeordnete lichtundurchlässige Skalen 4 und 5 bildet.

Die Skalen 4 und 5 sind im radialen Abstand zueinander angeordnet und werden jeweils von einem beobachterseitig vor der Skalenscheibe 1 befindlichen Zeiger 6 bzw. 7 überstrichen. Die Zeiger 6 und 7 sind um zueinander koaxiale Zeigerachsen 8 und 9 drehbar.

Der der Skalenscheibe 1 nähere Zeiger 6 ist kürzer als der Zeiger 7. Da beide Zeiger 6 und 7 zur Skalenscheibe 1 geneigt sind, reichen ihre Zeigerspitzen bis zu den entsprechenden Skalen 4 bzw. 5.

Die Zeiger 6 und 7 sind in einer Kammer 10 angeordnet, die aus der Skalenscheibe 1 und einer im Abstand davor angeordneten transparenten Abdeckscheibe 11 gleicher Form sowie einem die umlaufenden Ränder von Abdeckscheibe 11 und Skalenscheibe 1 umschliessenden Rahmen 12 gebildet ist.

Koaxial zu den Zeigerachsen 8 und 9 ist je auf einer Seite der Kammer 10 ein Messwerk 13 und 14 angeordnet, wobei die Abtriebswelle des Messwerks 13 eine Ausnehmung der Abdeckscheibe 11 durchragt und mit dem Zeiger 7 verbunden ist.

Beide Messwerke 13 und 14 sind in einem die Kammer 10 u-förmig umgreifenden Gehäuse 15 angeordnet, wobei aber der Bereich der Skalen 4 und 5 frei ist, so dass Umgebungslicht von der dem Beobachter abgewandten Seite durch die Skalenscheibe 1 und die Abdeckscheibe 11 zum Beobachter hin durchströmen kann.

Die Zeiger 6 und 7 ragen radial durch einen Schlitz 18 aus dem Gehäuse 15 in die Kammer 10 und sind so entlang der Skalen 4 und 5 schwenkbar.

Der Boden des u-förmigen Gehäuses 15 ist mit einem balgartigen Fussteil 16 verbunden, das auf einem Armaturenbrett 17 eines Kraftfahrzeugs im direkten Sichtbereich des Fahrers angeordnet ist. Damit ist das Gehäuse 15 und die Kammer 10 in den optimalen Sichtbereich des Fahrers schwenkbar.

Dadurch, dass die Messwerke 13 und 14 Kreuzspul-Drehmagnet-Messwerke mit nur geringer Baugrösse sind, braucht auch das Gehäuse 15 nur eine geringe Baugrösse zu besitzen und bedeutet somit keine wesentliche Beeinträchtigung der Ablesbarkeit der Skalenscheibe 1.

## Patentansprüche

1. Anzeigevorrichtung zur Anzeige von zwei Messwerten auf einer mit zwei konzentrisch zueinander angeordneten Skalen (4, 5) versehenen Skalenscheibe (1), mit zwei Zeigern (6, 7), die um zueinander koaxiale Zeigerachsen (8, 9) drehbar und jeweils einer Skala zugeordnet sind, wobei jeder Zeiger (6, 7) von jeweils einem Messwerk (13, 14) drehbar antreibbar ist, dadurch gekennzeichnet, dass die Messwerke (13, 14) koaxial zueinander je auf einer Seite der Skalenscheibe (1) angeordnet und die die Zeiger (6, 7) tragenden Enden der Zeigerachsen (8, 9) einander zugewandt sind.

2. Anzeigevorrichtung nach Anspruch 1, dadurch gekennzeichnet, dass beide Messwerke (13, 14) in einem die Skalenscheibe (1) in einem Bereich ausserhalb der Skalen (4, 5) u-förmig umgreifenden Gehäuse (15) angeordnet sind.

3. Anzeigevorrichtung nach Anspruch 1, dadurch gekennzeichnet, dass beide Messwerke in einem die Skalenscheibe in einem Bereich ausserhalb der Skalen durchragenden Gehäuse angeordnet sind.

4. Anzeigevorrichtung nach einem der Ansprüche 2 oder 3, dadurch gekennzeichnet, dass das Gehäuse (15) mit einem Fussteil (16) ausgebildet ist.

5. Anzeigevorrichtung nach einem der vorhergehenden Ansprüche, dadurch gekennzeichnet, dass die Zeigerachse des einen Zeigers (6) eine Ausnehmung der Skalenscheibe (1) durchragt und beide Zeiger (6, 7) auf einer Seite der Skalenscheibe (1) angeordnet sind.

6. Anzeigevorrichtung nach Anspruch 5, dadurch gekennzeichnet, dass der der Skalenscheibe (1) nähere Zeiger (6) eine geringere Längserstreckung besitzt als der der Skalenscheibe (1) entfernte Zeiger (7).

7. Anzeigevorrichtung nach Anspruch 6, dadurch gekennzeichnet, dass die Zeiger (6, 7) mit ihren freien Enden zur Skalenscheibe (1) geneigt sind.

8. Anzeigevorrichtung nach einem der vorhergehenden Ansprüche, dadurch gekennzeichnet, dass die Skalen (4, 5) in radialem Abstand zueinander angeordnet sind.

9. Anzeigevorrichtung nach Anspruch 5, dadurch gekennzeichnet, dass die Zeiger (6, 7) in einer Kammer (10) angeordnet sind, die aus der Skalenscheibe (1) und einer beobachterseitig in einem Abstand dazu angeordneten, transparenten Abdeckscheibe (11) gebildet ist.

10. Anzeigevorrichtung nach einem der vorhergehenden Ansprüche, dadurch gekennzeichnet, dass die Skalenscheibe (1) als transparente, von der dem Beobachter abgewandten Seite lichtdurchströmbare Platte ausgebildet ist, auf der die lichtundurchlässigen Skalen (4, 5) angeordnet sind.

11. Anzeigevorrichtung nach Anspruch 10, dadurch gekennzeichnet, dass die Skalenscheibe (1) als beleuchtbare Lichtleitplatte ausgebildet ist, in der lichtumlenkende Partikel (2) angeordnet sind.

## Claims

1. Indicating device for indicating two measurement values on a scale dial (1) provided with two scales (4, 5) which are arranged concentrically with respect to one another, having two pointers (6, 7) which are rotatable around pointer shafts (8, 9) which are coaxial with respect to one another and are in each case allocated to one scale, in which arrangement each pointer (6, 7) can be rotatably driven by one measuring mechanism (13, 14) in each case, characterized in that the measuring mechanisms (13, 14) are arranged coaxially with respect to one another on one side each of the scale dial (1) and the ends of the pointer shafts (8, 9) carrying the pointers (6, 7) face one another.

2. Indicating device according to Claim 1, characterized in that both measuring mechanisms (13, 14) are arranged in a housing (15) which encircles the scale dial (1) in a U-shape in an area outside the scales (4, 5).

3. Indicating device according to Claim 1, characterized in that both measuring mechanisms are arranged in a housing which protrudes through the scale dial in an area outside the scales.

4. Indicating device according to one of Claims 2 or 3, characterized in that the housing (15) is constructed with a foot part (16).

5. Indicating device according to one of the preceding claims, characterized in that the pointer shaft of one pointer (6) protrudes through an opening in the scale dial (1) and both pointers (6, 7) are arranged on one side of the scale dial (1).

6. Indicating device according to Claim 5, characterized in that the pointer (6) closer to the scale dial (1) has a lesser longitudinal extent than the pointer (7) which is more remote from the scale dial (1).

7. Indicating device according to Claim 6, characterized in that the pointers (6, 7) are inclined with respect to the scale dial (1) with their free ends.

8. Indicating device according to one of the preceding claims, characterized in that the scales (4, 5) are arranged at a radial distance from one another.

9. Indicating device according to Claim 5, characterized in that the pointers (6, 7) are arranged in a chamber (10) which is formed from the scale dial (1) and a transparent cover plate (11) which is arranged at a distance from the former on the observer side.

10. Indicating device according to one of the preceding claims, characterized in that the scale dial (1) is constructed as a transparent plate through which light can flow from the side facing away from the observer and on which the opaque scales (4, 5) are arranged.

11. Indicating device according to Claim 10, characterized in that the scale dial (1) is constructed as a light-conducting plate which can be illuminated and in which light-deflecting particles (2) are arranged.

**Revendications**

1. Disposistif indicateur, pour indiquer deux valeurs de mesure sur un cadran gradué (1) présentant deux échelles graduées (4, 5) disposées concentriquement l'une à l'autre, comportant deux aiguilles (6, 7) qui peuvent tourner autour d'axes (8, 9) coaxiaux l'un à l'autre et correspondent chacune à une échelle graduée, étant précisé que chaque aiguille (6, 7) peut être entraînée en rotation par, respectivement, un mécanisme de mesure (13, 14), dispositif caractérisé en ce que les mécanismes de mesure (13, 14) sont disposés, coaxialement l'un à l'autre, chacun d'un même côté du cadran gradué (1); et en ce que les extrémités des axes (8, 9) qui portent les aiguilles (6, 7) sont tournées l'une vers l'autre.

2. Disposistif indicateur selon la revendication 1, caractérisé en ce que les deux mécanismes de mesure (13, 14) sont disposés dans un carter (15) qui entoure, en forme de U, le cadran gradué (15) dans une zone située à l'extérieur des échelles graduées (4, 5).

3. Dispositif indicateur selon la revendication 1, caractérisé en ce que les deux mécanismes de mesure sont disposés dans un carter qui traverse le cadran gradué dans une zone située à l'extérieur des échelles graduées.

4. Dispositif indicateur selon l'une des revendications 2 ou 3, caractérisé en ce que la réalisation du carter (15) comporte un pied (16).

5. Dispositif indicateur selon l'une des revendications précédentes, caractérisé en ce que l'axe de l'une des aiguilles (6) traverse un évidement du cadran gradué (1); et en ce que les deux aiguilles (6, 7) sont disposées d'un côté du cadran gradué (1).

6. Dispositif indicateur selon la revendication 5, caractérisé en ce que l'aiguille (6) la plus proche du cadran gradué (1) possède une plus faible extension longitudinale que l'aiguille (7) la plus éloignée du cadran gradué (1).

7. Dispositif indicateur selon la revendication 6, caractérisé en ce que les aiguilles (6, 7) sont inclinées, par leur extrémité libre, en direction du cadran gradué (1).

8. Dispositif indicateur selon l'une des revendications précédentes, caractérisé en ce que les échelles graduées (4, 5) sont disposées à une certaine distance radiale l'une de l'autre.

9. Dispositif indicateur selon la revendication 5, caractérisé en ce que les aiguilles (6, 7) sont disposées dans une chambre (10), qui est formée du cadran gradué (1) et d'une plaque (11) transparente de recouvrement, disposée à une certaine distance du cadran gradué, côté observateur.

10. Dispositif indicateur selon l'une des revendications précédentes, caractérisé en ce que le cadran gradué (1) est conçu comme plaque transparente, à travers laquelle peut passer la lumière provenant du côté éloigné de l'observateur et sur laquelle sont disposées les échelles graduées (4, 5) opaques à la lumière.

11. Dispositif indicateur selon la revendication 10, caractérisé en ce que le cadran gradué (1) est conçu comme plaque conductrice de la lumière, que l'on peut éclairer et dans laquelle sont disposées des particules (2) qui renvoient la lumière.

FIG. 1

FIG. 2